# EUROPÄISCHE PATENTSCHRIFT

(11) **EP 3 406 340 B1**
(45) Veröffentlichungstag und Bekanntmachung des Hinweises auf die Patenterteilung: **07.07.2021**
(21) Anmeldenummer: 17172994.0
(22) Anmeldetag: 26.05.2017
(51) Int. Cl.: B01L 3/00

(54) **FLUSSZELLE MIT GEHÄUSEBAUTEIL**
FLOW CELL WITH HOUSING COMPONENT
CELLULE D'ÉCOULEMENT COMPRENANT UN ÉLÉMENT DE BOÎTIER

(43) Veröffentlichungstag der Anmeldung: 28.11.2018
(73) Patentinhaber: THINXXS MICROTECHNOLOGY AG, 66482 Zweibrücken (DE)
(72) Erfinder: WEBER, Lutz, 66981 Münchweiler (DE)
(74) Vertreter: Patentanwälte Bernhardt / Wolff Partnerschaft mbB

(56) Entgegenhaltungen:
- EP-A1- 2 962 758
- WO-A1-2015/073999
- WO-A1-2016/051272

## Beschreibung

Die Erfindung betrifft eine mikrofluidische Flusszelle für die Durchführung einer Analyse, mit einem Substrat aus Kunststoff, das Hohlräume für die Bildung von Kanalstrukturen und Kammern aufweist, wobei die Hohlräume auf einer Seite des Substrats durch eine mit dem Substrat verklebte oder/und verschweißte Folie verschlossen sind und mit einem als Verbundteil durch Mehrkomponentenspritzgießen mit einer Hart- und einer Weichkomponente hergestellten Gehäusebauteil, das auf einer der Folie abgewandten Seite des Substrats unter Komplettierung eines eine Funktion der Flusszelle erfüllenden Funktionsabschnitts mit dem Substrat verbunden ist.

Aus der WO 2015/073999 A1 geht eine Anordnung aus einer Kartusche und einer Anschlusseinrichtung hervor. Die Kartusche, die zur Analyse einer Probe dient, umfasst neben einem Substratkörper und einer Abdeckfolie eine verformbare Schicht.

Die EP 2 962 758 A1 beschreibt eine Flusszelle mit einem plattenförmigen Substrat, das auf beiden Plattenseiten mit einer Folie abgedeckt ist, wobei die von außen dehnbare Folie auf einer Seite jeweils einen Funktionsabschnitt komplettiert.

Eine mikrofluidische Flusszelle mit den eingangs erwähnten Merkmalen geht aus WO 16/051272 A1 hervor. Als Funktionsabschnitt ist u.a. eine die Weichkomponente des Gehäusebauteils umfassende Pumpeinrichtung gebildet.

Durch die Erfindung wird eine solche mikrofluidische Flusszelle dadurch weitergebildet, dass das Gehäusebauteil als in einem einzigen Fügeprozess mehr als zwei Funktionsabschnitte komplettierendes Multifunktionsteil ausgebildet ist, dass das Gehäusebauteile mehrere elastisch verformbare, getrennt voneinander angeordnete Weichkomponentenabschnitte aufweist, und dass die Hartkomponente des Gehäusebauteils als Funktionsabschnitt der Flusszelle eine Speicherkammer komplettiert.

Vorteilhaft lassen sich komplex strukturierte Flusszellen mit dem multifunktionalen Gehäusebauteil nach der Erfindung äußerst effizient unter abschließender Fertigstellung ggf. aller Funktionsabschnitte herstellen. So stellt die Erfindung eine außerordentlich fertigungsfreundliche Lösung für eine Flusszelle bereit.

Das Gehäusebauteil ist erfindugnsgemäß im Mehrkomponenten-Spritzgießverfahren hergestellt. Es versteht sich, dass Spritzgießen auch für das Substrat als bevorzugtes Herstellungsverfahren in Betracht kommt.

Das Gehäusebauteil kann mit dem Substrat verschweißt oder/und thermisch vernietet sein. Auch Verklebung ist möglich. Bei thermischer Vernietung wird Dichtigkeit zwischen dem Gehäusebauteil und dem Substrat durch Klemmkräfte hergestellt, indem vom Substrat oder Gehäusebauteil in Durchgangsöffnungen im jeweils anderen Bauteil ragende Nietstifte unter Wärmeeinwirkung verformt werden, so dass sie die Durchgangsöffnung hintergreifen. Es versteht sich, dass im Verbindungsbereich vorstehende Lippen auf einem oder beiden Bauteilen vorhanden sein können. Zur Verschweißung durch Ultraschall sind im Verbindungsbereich zweckmäßig Vorsprünge als Richtungsgeber gebildet.

Das Gehäusebauteil kann einstückig mit einem verschwenkbaren Verschlusselement, insbesondere zur Abdeckung einer Probeneingabeöffnung, verbunden sein, z.B. über ein Filmscharnier. Zweckmäßig ist das Verschlusselement in der Verschlussstellung arretierbar und deckt z.B. die Probeneingabeöffnung der Flusszelle nach Eingabe einer Probe hermetisch ab. Die ggf. durch ein Betätigungselement eines Betriebsgeräts verstärkte Abdeckkraft des Verschlusselements kann den hermetischen Verschluss zusätzlich sichern oder allein für den hermetischen Verschluss maßgebend sein.

Die Weichkomponentenabschnitte können wenigstens teilweise transparente Weichkomponentenabschnitte umfassen, wobei solche Abschnitte z.B. ein Sichtfenster bilden.

In weiterer Ausgestaltung der Erfindung sind die Weichkomponentenabschnitte mit dem Substrat lokal verschweißt oder/und verklebt, wobei solche lokalen Verbindungsstellen z.B. ringförmig um einen Hohlraum umlaufend ausgebildet sein können.

Als Weichkomponentenabschnitte kommen z.B. gewölbte Pumpelemente oder/und auswölbbare Membranen in Betracht. Gewölbte Pumpelemente sind von Hand oder durch ein Betätigungselement eines Betriebsgerätes so verformbar, dass ein durch das Pumpelement gebildetes Pumpvolumen verändert wird.

Neben Pumpeinrichtungen kommt als Funktionsabschnitt der Flusszelle erfindungsgemäße eine durch das Gehäusebauteil begrenzte Speicherkammer in Betracht, wobei die Speicherkammer allein durch die Hartkomponente des Gehäusebauteils begrenzt sein kann

In letzterem Fall ist die Speicherkammer zweckmäßig durch Sollbruchsperren in einem Zu- und Abflusskanal verschlossen.

Als Funktionsabschnitt der Flusszelle ist erfindungsgemäß eine Einrichtung zum Aufbrechen einer Sollbruchsperre gebildet, die einen von außen verformbaren Weichkomponentenabschnitt des Gehäusebauteils umfasst. Es versteht sich, dass eine solche Einrichtung zum Aufbrechen der Sollbruchsperren für die vorangehend beschriebenen Speicherkammern verwendbar ist. Zur Bildung einer Speicherkammer, die durch eine verformbare Weichkomponente des Gehäusebauteils begrenzt wäre, könnte ein Aufbrechen einer Sollbruchsperre ggf. durch Verformung der betreffenden Kammerwand erfolgen.

Der Weichkomponentenabschnitt der Einrichtung zum Aufbrechen einer Sollbruchsperre umfasst zweckmäßig eine auswölbbare Membran.

Als weiterer Funktionsabschnitt für eine Flusszelle kann ein Septum gebildet sein, das einen mit einer Kanüle durchstoßbaren Weichkomponentenabschnitt des Gehäusebauteils umfasst.
In weiterer Ausgestaltung der Erfindung ist als Funktionsabschnitt der Flusszelle eine Ventileinrichtung gebildet, die einen elastisch von außen unter Verschluss einer Ventilöffnung verformbaren Weichkomponentenabschnitt des Gehäusebauteils umfasst.

Der Weichkomponentenabschnitt der Ventileinrichtung weist zweckmäßig eine ggf. nach innen durch eine Folie abgedeckte Membran auf.

Als Funktionsabschnitt kommt ferner eine Gasfeder in Betracht, die einen durch Innendruck in der Flusszelle unter Änderung des Gasfedervolumens verformbaren Weichkomponentenabschnitt des Gehäusebauteils umfasst.

Ein solcher Weichkomponentenabschnitt kann z.B. durch eine Membran gebildet sein, deren Auslenkung durch ein Stempelelement eines Betriebsgeräts begrenzbar ist und eingestellt werden kann. Ein solcher Weichkomponentenabschnitt kann ferner z.B. durch ein gewölbtes Pumpelement gebildet sein, dessen Auslenkung durch ein Stempelelement neben einer Veränderung des Gasfedervolumens gleichzeitig eine Pumpwirkung hervorruft. Insbesondere kann eine Kombination aus mindestens zwei durch Weichkomponentenabschnitte gebildeten Pump-/Gasfederelementen in Verbindung mit diese verformenden Betätigungselementen eines Betriebsgerätes innerhalb einer gegenüber der Umgebung hermetisch verschlossenen Flusszelle eine Transportvorrichtung für Fluide bilden. Zweckmäßig wird hierzu eines der Pumpelemente stromaufwärts und ein weiteres stromabwärts von dem zu transportierenden Fluidvolumen angeordnet. Eine solche Anordnung erlaubt bei gegenüber dem Umgebungsdruck erhöhtem Innendruck der Flusszelle Bewegungen des Fluidvolumens sowohl stromab- als auch stromaufwärts, wobei der Innendruck durch den Grad der Auslenkung eines oder beider Pump-/Gasfederelemente kontrolliert eingestellt werden kann.

In weiterer Ausgestaltung der Erfindung ist als Funktionsabschnitt der Flusszelle eine Entgasungsvorrichtung gebildet, welche ein Gasvolumen entfernt, das sich zwischen zwei, durch einen Gasabschnitt getrennten Fluidvolumenabschnitten befindet, so dass die beiden Fluidvolumenabschnitte nach der Entgasung miteinander verbunden sind und einer weiteren Verarbeitungseinrichtung der Flusszelle, wie z.B. einem Sensor oder einer Misch- oder Reaktionskammer, zugeführt werden können. Hierzu ist ein auslenkbarer Weichkomponentenabschnitt, z.B. in Form eines gewölbten Pumpelements, mit einem von den Fluidvolumenabschnitten durchströmten Kanalbereich der Flusszelle derart verbunden, dass sich zwischen einem durch den auslenkbaren Weichkomponentenabschnitt gebildeten Volumen und dem Kanalbereich eine für Gas permeable, den Kanalbereich begrenzende, Membran befindet. Zur Entgasung wird der Weichkomponentenabschnitt zu einem Zeitpunkt ausgelenkt, bevor der erste Fluidvolumenabschnitt den durch die Membran begrenzten Kanalbereich erreicht hat. Die Auslenkung erfolgt bevorzugt durch Eindrücken des Weichkomponentenabschnitts durch einen Stempel eines Betriebsgeräts. Wird der erste Fluidvolumenabschnitt in den durch die Membran verschlossenen Kanalbereich gepumpt, so fährt der Stempel zurück, die Auslenkung des Weichkomponentenabschnitts bleibt aber aufgrund der fehlenden Entlüftung bestehen. Im Volumenbereich zwischen dem Weichkomponentenabschnitt und der permeablen Membran entsteht durch die elastische Rückstellkraft des Weichkomponentenabschnitts Unterdruck, welcher dazu führt, dass das Gasvolumen zwischen den durch den Kanalbereich gepumpten, aufeinanderfolgenden Fluidvolumenabschnitten durch die Membran hindurch entweicht und so die aufeinanderfolgenden Fluidvolumenabschnitte miteinander verbunden werden.

Eine die eingegebene Probe aufnehmende Kammer kann derart länglich geformt sein, dass eine Probeneingabe mittels eines einen Tupfer tragenden Stabes möglich ist, wobei der Stab eine Sollbruchstelle aufweist. Eine längliche Öffnung zum Einführen des Stabs mit dem Tupfer kann eine Verengung an einem Ende aufweisen, die ein Abbrechen des Stabes an der Sollbruchstelle erlaubt, wobei der das Probenmaterial enthaltende Tupfer und das abgebrochene Stabende in der Probenkammer verbleiben.

Es versteht sich, dass die vorangehend beschriebenen Ausführungsformen von Funktionsabschnitten auch bei Komplettierung von weniger als drei Funktionsabschnitten durch das Gehäusebauteil zur Anwendung in einer Flusszelle kommen könnten.

Die Erfindung ist nachfolgend anhand von Ausführungsbeispielen und der beiliegenden, sich auf diese Ausführungsbeispiele beziehenden Zeichnungen weiter erläutert. Es zeigen:
- Fig. 1: eine erfindungsgemäße Flusszelle in einer Draufsicht schräg von oben bei geöffneter und verschlossener Probeneingabeöffnung,
- Fig. 2: die Flusszelle von Fig. 1 in Explosionsdarstellung,
- Fig. 3: ein Substrat der Flusszelle von Fig. 1 und 2,
- Fig. 4 bis 7: Verbindungen zwischen einem Substrat und einem Gehäusebauteil der Flusszelle von Fig. 1 bis 3 erläuternde Darstellungen,
- Fig. 8: verschiedene Ausführungsformen einer Speicherkammer in einer erfindungsgemäßen Flusszelle,
- Fig. 9: eine Einrichtung zum Aufbrechen einer Sollbruchsperre einer Speicherkammer,
- Fig. 10: eine weitere Einrichtung zum Aufbrechen einer Sollbruchsperre einer Speicherkammer,
- Fig. 11 bis 13: weitere Ausführungsbeispiele für Funktionsabschnitte einer erfindungsgemäßen Flusszelle,
- Fig. 14 und 15: Ausführungsbeispiele für Ventile in einer erfindungsgemäßen Flusszelle,
- Fig. 16 und 17: Ausführungsbeispiele für Pumpeinrichtungen in einer erfindungsgemäßen Flusszelle,
- Fig. 18: ein Ausführungsbeispiel für eine Gasfeder in einer erfindungsgemäßen Flusszelle,
- Fig. 19: ein Ausführungsbeispiel für einen Klemmanschluss einer erfindungsgemäßen Flusszelle,
- Fig. 20: eine erfindungsgemäße Flusszelle mit einem durch eine Weichkomponente eines Gehäusebauteils gebildeten Dichtring zur Abdichtung eines Sensorelements,
- Fig. 21: eine Probeneingabeöffnung einer Flusszelle nach der Erfindung, die durch einen geschlitzten Weichkomponentenabschnitt des Gehäusebauteils abgedeckt ist,
- Fig. 22: eine Anordnung zum Entfernen von Gasblasen aus einer in einer Flusszelle nach der Erfindung strömenden Flüssigkeit, und
- Fig. 23 und 24: Ausführungsbeispiele für erfindungsgemäße Flusszellen mit einer Einrichtung zur Bemessung einer Probenmenge.

Eine Flusszelle für die Durchführung einer Analyse umfasst ein im Wesentlichen plattenförmiges Substrat 1, das im Spritzgießverfahren aus einem Kunststoff hergestellt ist, vorzugsweise aus PP, PE, PMMA, PC, COC oder COP.

Das Substrat 1 ist mit einem in seiner Grundform als Platte ausgebildeten Gehäusebauteil 2 verbunden, welches das Substrat 1 auf einer Plattenseite, in dem gezeigten Beispiel teilweise, abdeckt. Das Gehäusebauteil 2 ist als Verbundteil aus einer Hartkomponente und einer Weichkomponente im Zweikomponenten-Spritzgießverfahren hergestellt. Die Hartkomponente besteht z.B. aus PP, die Weichkomponente aus einem Elastomer, insbesondere thermoplastischen Elastomer, oder Silikon. Die Weichkomponente könnte wenigstens teilweise transparent sein.

Auf seiner dem Gehäusebauteil 2 abgewandten Seite ist das Substrat 1 mit einer Folie 3 verbunden, welche in dem Substrat 1 gebildete Hohlräume verschließt und mit dem Substrat 1 verklebt oder verschweißt ist. Vorzugsweise besteht die Folie 3 aus dem gleichen Material wie das Substrat 1.

Das Substrat 1 umfasst eine als Auswölbung der Substratplatte ausgebildete, durch die Folie 3 abgedeckte Probenkammer 4 mit einer Probeneingabeöffnung 5. Die Probeneingabeöffnung 5 lässt sich durch eine Lasche 6 verschließen, die über ein Filmscharnier gelenkig mit dem Gehäusebauteil 2 verbunden und in einer Öffnung 7 in einem profilierten Griffteil 8 des Subtrats 1 verrastbar ist.

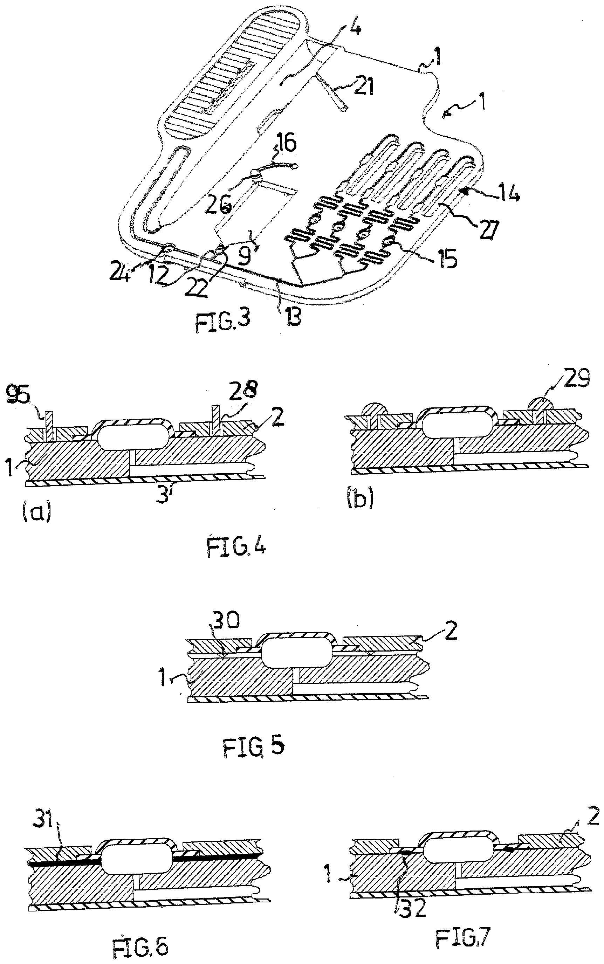

Das Substrat 1 weist ferner eine Ausnehmung 9 auf, die gemeinsam mit einer zu der Ausnehmung 9 ausgerichteten Ausbuchtung 10 in der Hartkomponente des Gehäusebauteils 2 eine Speicherkammer 11 für ein flüssiges Reagenz bildet. Wie insbesondere Fig. 3 erkennen lässt, ist zwischen der die Speicherkammer 11 bildenden Ausnehmung 9 und einer Kanalstruktur 13 ein Kanal 12 mit einer Sollbruchsperre 22 gebildet und über die Kanalstruktur 13 eine Verbindung sowohl mit der Probenkammer 4 als auch einem Analyseabschnitt 14, der im Wesentlichen durch das Substrat 1 und die Folie 3 gebildet ist, herstellbar. In dem gezeigten Beispiel weist der Analyseabschnitt 14 vier Einstecköffnungen für pfropfenförmige Träger 15 eines Trockenreagenz auf.

Über einen weiteren Kanal 16 mit einer Sollbruchsperre 26 ist die Speicherkammer 11 mit einem Pumpvolumen 18 verbindbar, das durch einen gewölbten Abschnitt 17 der Weichkomponente des Gehäusebauteils 2 gebildet ist. Ein weiteres, durch einen gewölbten Abschnitt 19 der Weichkomponente gebildetes Pumpvolumen 20 steht über einen Kanal 21 in Verbindung mit der Probenkammer 4.

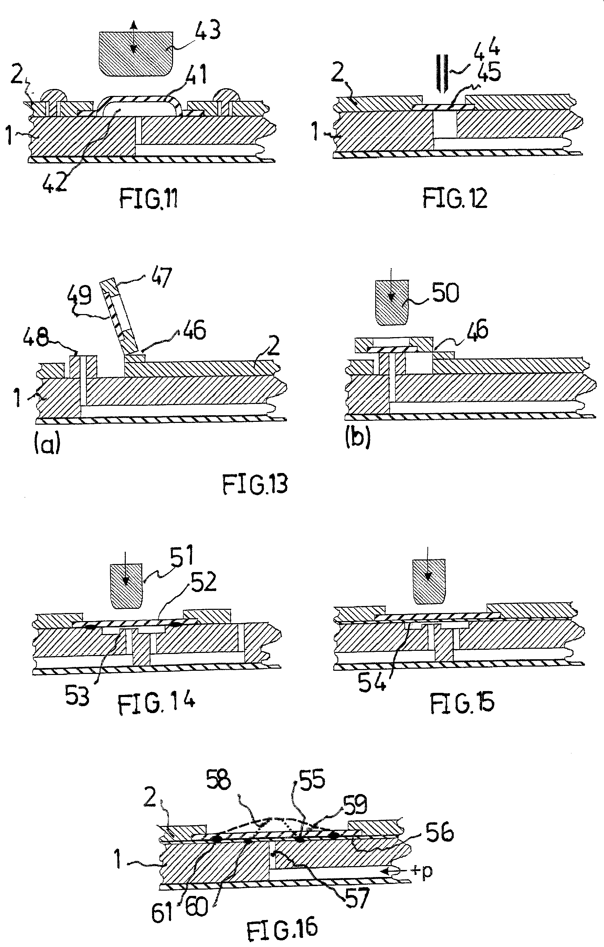

Zur Benutzung der vorangehend beschriebenen Flusszelle wird eine zu analysierende Probe durch die Probeneingabeöffnung 5 hindurch in die Probenkammer 4 eingebracht und die Probenkammer 4 anschließend durch Umlegen der Verschlusslasche 6 verschlossen. Es versteht sich, dass die Verschlusslasche 6 auf ihrer der Probeneingabeöffnung 5 zugewandten Seite ein die Öffnung abdeckendes Dichtelement aufweist, wie dies weiter unten anhand von Fig. 13 beschrieben ist. Gegebenenfalls wird ein durch Verrastung mit der Öffnung 7 erzielter Andruck der Verschlusslasche 6 gegen die Probeneingabeöffnung 5 mit Hilfe eines die Flusszelle aufnehmenden Betriebsgerätes (hier wie im Folgenden nicht gezeigt) z.B. durch mechanischen Stempelandruck verstärkt.

Die hermetisch verschlossene Flusszelle wird in einem Betriebsgerät in einer vorgegebenen Stellung angeordnet, so dass sich Probenmaterial am Ausgang der Probenkammer 4 schwerkraftbedingt sammelt und ggf. entstehende Luftblasen innerhalb der hermetisch verschlossenen Flusszelle in gewünschter Richtung nach oben steigen.

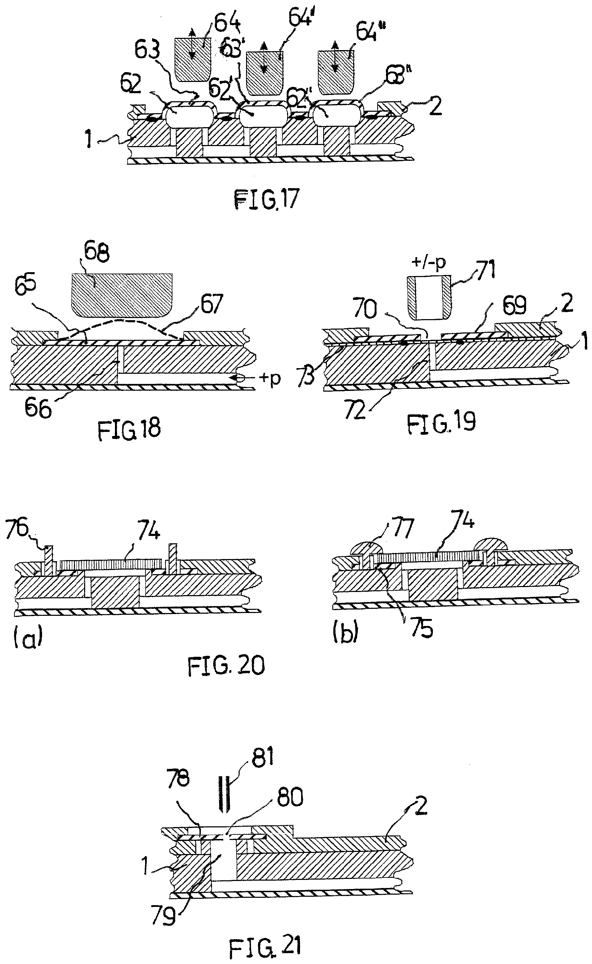

Durch mechanische Betätigung des gewölbten, ein Pumpelement bildenden Abschnitts 17 und damit verbundener Verringerung des Pumpvolumens 18 wird, nach Öffnung der Sollbruchsperren 22 und 26 und eines Ventils 23 durch das Betriebsgerät flüssiges Reagenz aus der Speicherkammer 11 in die Probenkammer 4 unter Aufbau eines über dem Atmosphärendruck liegenden Innendrucks in der Flusszelle befördert. Betätigung des ein weiteres Pumpelement bildenden Abschnitts 19 unter Verringerung des Pumpvolumens 20 sorgt für einen Rücktransport des mit der Probe gemischten flüssigen Reagenz in die Speicherkammer 11, das sowohl beim Hintransport als auch Rücktransport mit einem Trockenreagenz eines pfropfenförmigen Trockenreagenzträgers 24 in Kontakt kommt. Durch abwechselnde Betätigung der Abschnitte bzw. Pumpelemente 17,19 kommt es zum vollständigen Auswaschen des Trockenreagenz von dem Trockenreagenzträger 24 und zum Mischen des Flüssigreagenz mit der Probe. Die Mischung aus Probenmaterial und Reagenzien, die sich nach vollständiger Auswaschung wieder in der Speicherkammer 11 befindet, wird nach Schließen des Ventils 23 und Öffnen eines Ventils 25 aus der Speicherkammer 11 in den Analyseabschnitt 14 überführt und das Fluidmaterial in vier Teilmengen aufgeteilt. In der hermetisch abgeschlossenen Flusszelle erfolgt die Bewegung der Flüssigkeit innerhalb des Analyseabschnitts gegen den Druck einer Luftfeder 27, wie dies in Fig. 18 beschrieben ist. Durch Betätigung des Pumpelements 17 lässt sich das Fluidmaterial innerhalb des Analyseabschnitts bei Bedarf hin und her bewegen. Beim den Transport des Fluidmaterials gegen die Luftfeder 27 erfolgt ein Druckaufbau, welcher typisch im Bereich von 0,1 bis 5 bar über dem Atmosphärendruck liegt. Ein Innendruck von 1 - 2 bar ist für die Durchführung von Temperierschritten im Analyseabschnitt 14 von Vorteil, wie diese z.B. bei PCR- oder Lyse-Prozessen üblich sind, wobei Flüssigkeiten bis auf 100 °C erwärmt werden. Der durch den Flüssigkeitstransport aufgebaute Innendruck kann Ausgasen der temperierten Flüssigkeiten verhindern oder verringern. Der Analyseabschnitt umfasst Detektionsabschnitte zur Erfassung des Analyseergebnisses.

Nach Beendigung der Analyse können alle Betätigungselemente eines Betriebsgerätes in Ihre Ausgangsstellung zum Zeitpunkt des Einfügens der Flusszelle in das Betriebsgerät gebracht werden. Damit gelangen die Pumpelemente 17 und 19 wieder in ihre Ausgangsform und der während der Analyse vorteilhaft erhöhte Innendruck in der Flusszelle ist wieder auf Atmosphärendruck abgesenkt. In Verbindung mit einem hermetischen Verschluss der Flusszelle verhindert diese Absenkung vorteilhaft ungewollten Austritt des analysierten Probengemisches bei der Entsorgung der Flusszelle.

Im Folgenden sind Ausführungsbeispiele für verschiedene Funktionen erfüllende Funktionsabschnitte von Flusszellen beschrieben, wie sie z.B. in der vorangehend beschriebenen, ein Gehäusebauteil mit einer Hart- und einer Weichkomponente aufweisenden Flusszelle zum Einsatz kommen können.

Eine erste Variante zur Verbindung des Gehäusebauteils 2 mit dem Substrat 1, insbesondere zur fluiddichten und/oder hermetisch Verbindung der Weichkomponente des Gehäusebauteils 2 mit dem Substrat 1, betrifft thermisches Nieten gemäß Fig. 4. Einstückig mit dem Substrat 1 verbundene, von dem Substrat 1 vorstehende Nietstifte 95 ragen durch entsprechende Öffnungen 28 in der Hartkomponente des Gehäusebauteils 2 hindurch, wie dies aus Fig. 4a hervorgeht. Gemäß Fig. 4b werden die Nietstifte 95 unter Bildung die Öffnungen 28 hintergreifender Pilzköpfe 29 thermisch verformt, so dass das Gehäusebauteil 2 zwischen dem Substrat 1 und den Pilzköpfen 29 eingeklemmt wird.

Fig. 5 deutet die Möglichkeit zur Ultraschallverschweißung des Gehäusebauteils 2 mit dem Substrat 1 an, wobei die Hartkomponente des Gehäusebauteils 2 mit prismenförmigen, um einen Weichkomponentenabschnitt ggf. umlaufenden Richtungsgebern 30 versehen ist. Beim Einkoppeln von Ultraschall schmelzen die Richtungsgeber 90 und verschweißen mit der Oberfläche des Substrats 1.

In den in Fig. 4 und 5 gezeigten Ausführungsbeispielen erfolgt fluiddichte bzw. hermetische Verbindung zwischen der Weichkomponente des Gehäusebauteils 2 und dem Substrat 1 durch Aufpressen und Klemmen.

Fig. 6 zeigt ein Ausführungsbeispiel, bei dem das Gehäusebauteil 2 und das Substrat 1 miteinander verklebt sind, in dem gezeigten Beispiel durch ein doppelklebendes Klebeband 31.

Fig. 7 zeigt eine Verbindung eines Gehäusebauteils 2 mit einem Substrat 1, bei der ein Weichkomponentenabschnitt des Gehäusebauteils 2 bei 32 lokal mit dem Substrat 1 verklebt oder verschweißt ist. Die Verbindung könnte auch geschlossen umlaufend ausgebildet sein.

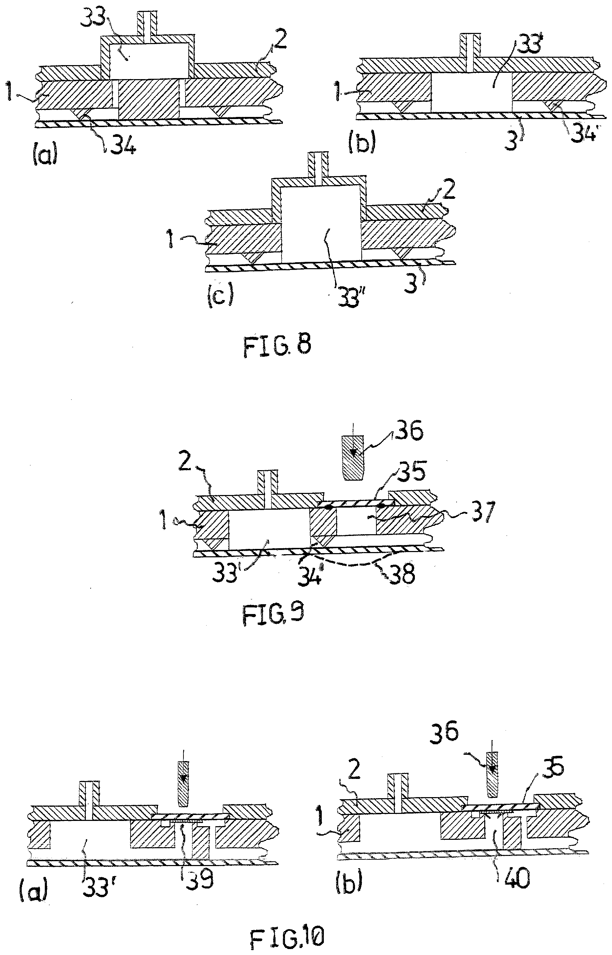

Fig. 8 zeigt drei verschiedene Möglichkeiten zur Bildung einer Speicherkammer für eine Flüssigkeit. Im Fall des Ausführungsbeispiels von Fig. 8a wird eine Speicherkammer 33 allein durch eine Ausbuchtung der Hartkomponente des Gehäusebauteils 2 gebildet.
Im Falle des Ausführungsbeispiels von 8b erfolgt die Bildung einer Speicherkammer 33' allein durch eine Ausnehmung im Substrat 1.
Fig. 8c zeigt eine der oben beschriebenen Speicherkammer 11 entsprechende Speicherkammer 33", die sowohl durch eine Ausbuchtung des Gehäusebauteils 2 als auch durch eine Ausnehmung im Substrat 1 gebildet ist. Bei allen Varianten 8a bis 8c ist die Speicherkammer 33,33' bzw. 33" jeweils ein- und ausgangsseitig durch aufbrechbare Sollbruchsperren 34,34' verschlossen. Ein prismenförmiges Sperrglied verschließt den Kanal und ist am Kamm mit der Folie 3 verklebt oder verschweißt.

Zum Aufbrechen der Sollbruchsperren 34,34' kommt jeweils eine in Fig. 9 beispielhaft für die Sollbruchstelle 34' vorgesehene Anordnung in Betracht. Eine umlaufend fluiddicht mit dem Substrat 1 verschweißte Membran 35 aus Elastomermaterial ist Bestandteil der Weichkomponente des Gehäusebauteils 2 und durch ein Betätigungselement 36 eines Betriebsgerätes in eine Durchgangsöffnung 37 in dem Substrat 1 hindurch ausdehnbar, bis sie die mit dem Substrat 1 verklebte oder verschweißte Folie 3 gemäß Strichlinie 38 auslenkt, so dass die Sollbruchsperre 34' aufbricht. Durch die Auslenkung der Folie 3 reißt die Folie 3 vom Kamm des den Kanal verschließenden prismenförmigen Sperrglieds ab.

Eine in Fig. 10 gezeigte Sollbruchsperre ist durch eine Sperrfolie 39 gebildet, die eine Durchgangsöffnung 40 im Substrat 1, die mit der Speicherkammer 33' in Fluidverbindung steht, abdeckt und insbesondere gegen einen die Durchgangsöffnung 40 umgebenden Ringvorsprung anliegt und mit diesem dicht verschweißt ist, um einen hermetischen Verschluss der mit Flüssigkeit wenigstens teilweise gefüllten Speicherkammer für den Zeitraum zwischen Herstellung und Anwendung der Flusszelle sicherzustellen. Ein Betätigungselement 36 eines Betriebsgeräts dehnt eine Elastomermembran 35, die Bestandteil der Weichkomponente des Gehäusebauteils 2 ist, derart aus, dass die Sperrfolie 39 unter Öffnung der Sollbruchsperre aufbricht. Vorteilhaft kommt die Elastomermembran 35 nicht in Kontakt mit der in der Speicherkammer 33' gespeicherten Flüssigkeit, so lange die Sollbruchsperre nicht aufgehoben ist. So bedarf es für die Membran 35 keines längerfristig mit dem Fluid in der Flusszelle verträglichen Materials.

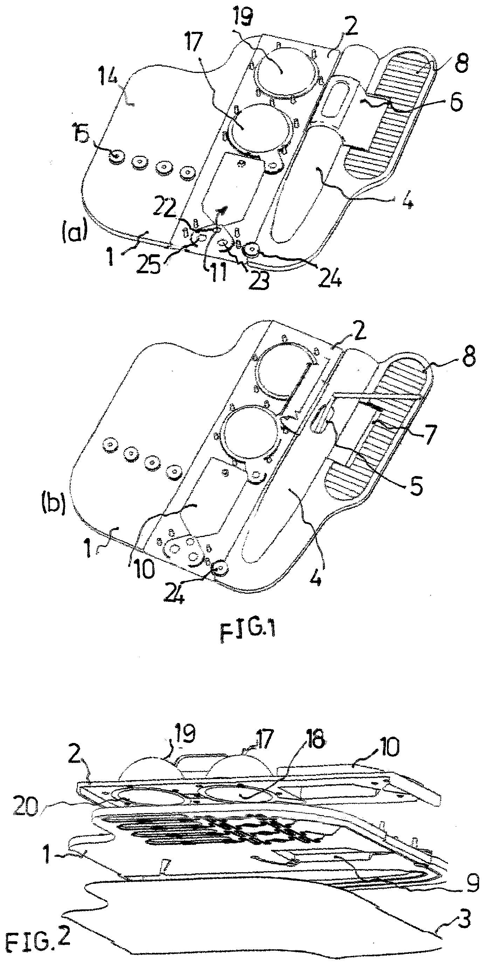

Ein in Fig. 11 gezeigter, eine Pumpfunktion erfüllender Funktionsabschnitt einer Flusszelle, wie er oben ähnlich bereits anhand von Fig. 1 bis 3 beschrieben ist, umfasst ein gewölbtes, ein Pumpvolumen 42 bildendes Pumpelement 41 aus Elastomermaterial. Das Pumpelement 41 ist Bestandteil der Weichkomponente des mit dem Substrat 1 in diesem Fall durch Vernietung verbundenen Gehäusebauteils 2. Das Pumpelement 41 ist zur Betätigung durch ein Betätigungselement 43 eines Betriebsgeräts vorgesehen. Der Förderstrom ist durch Einstellung der Vorschubgeschwindigkeit des Betätigungselements 43 kontrollierbar und hängt überdies von der Geometrie des Betätigungselements 43 ab. Das Pumpelement 41 ist derart elastisch und weist ein solches Rückstellmoment auf, dass durch das Pumpelement bei Rückstellung ein Förderstrom in entgegengesetzter Richtung erzeugt werden kann.

Ein in Fig. 12 dargestellter Funktionsabschnitt einer Flusszelle umfasst eine Membran 45 aus Elastomermaterial, welche durch die Weichkomponente des mit dem Substrat 1 verbundenen Gehäusebauteils 2 gebildet ist. Die Membran 45 aus Elastomermaterial bildet ein mit einer Kanüle 44 durchstoßbares Septum, durch das hindurch während vor oder nach einer Analyse Material in die Flusszelle eingegeben werden kann.

Fig. 13 zeigt eine einstückig mit dem Gehäusebauteil 2 über ein Filmscharnier 46 verbundene Verschlusslasche 47 zur Abdeckung einer Probeneingabeöffnung 48 der Flusszelle. Die Lasche weist eine Elastomermembran 49 auf, die Bestandteil der Weichkomponente des Gehäusebauteils 2 ist und die Probeneingabeöffnung 48 abdichtet. Für hermetischen Verschluss der Probeneingabeöffnung sorgt ein Betätigungselement 50 eines Betriebsgeräts.

Ausführungsbeispiele für eine Ventilfunktion erfüllende Funktionsabschnitte einer Flusszelle zeigen die Fig. 14 und 15. Eine Elastomermembran 52, die Bestandteil des mit dem Substrat 1 verbundenen Gehäusebauteils 2 ist, kann im geschlossenen Zustand des Ventils durch ein Betätigungselement 51 eines Betriebsgeräts gegen einen erhabenen Ventilsitz 53 gedrückt werden. Das Ventil öffnet, wenn der Andruck durch das Betätigungselement 51 aufgehoben wird.
Der Funktionsabschnitt von Fig. 15 unterscheidet sich von dem Funktionsabschnitt von Fig. 14 dadurch, dass die Elastomermembran 52 auf ihrer dem Ventilsitz 53 zugewandten Seite durch eine Kunststofffolie 54 abgedeckt ist, welche einen unmittelbaren Kontakt der Elastomermembran 52 zu Flüssigkeit innerhalb der Flusszelle verhindert.

Fig. 16 zeigt eine durch Beaufschlagung mit einem Druck p betätigbare Pumpe (oder ein Ventil) mit einem eine Elastomermembran 55 aufweisenden Gehäusebauteil 2 und einem Substrat 1. Das Gehäusebauteil 2 ist mit dem Substrat 1 über eine dehnbare Folie 56 verbunden, die über einen Druckbeaufschlagungskanal 57 gemäß Strichlinie 58 dehnbar ist, wobei sie die Elastomermembran 55 ausdehnt und ein Volumen 59 zwischen der Elastomermembran 55 und der Folie 56 erzeugt. Jeweils durch eine Ringschweißnaht 60 ist die Folie 56 mit dem Substrat 1 und durch eine Ringschweißnaht 61 die Elastomermembran 55 mit der Folie 56 verbunden.

Eine in Fig. 17 gezeigte, nach dem Peristaltik-Prinzip arbeitende Pumpe umfasst drei in Reihe geschaltete Pumpkammern 62,62',62", die zwischen dem Substrat 1 und ausgewölbten Pumpelementen 63,63',63" gebildet sind. Die aus Elastomermaterial bestehenden Pumpelemente sind Bestandteil der Weichkomponente des Gehäusebauteils 2. Zur Beförderung von Fluid wirken Betätigungselemente 64,64',63" eines Betriebsgeräts aufeinanderfolgend auf die ausgewölbten Pumpelemente 63, 63',63" ein. Zur Bildung der Pumpkammern 62,62',62" ist in dem gezeigten Beispiel das Substrat 1 jeweils eingebuchtet.
In einer alternativen Variante wird die die Pumpelemente 63,63',65" bildende Weichkomponente des Gehäusebauteils 2 durch eine Sperrfolie abgedeckt, so dass die Weichkomponente mit dem Fluid in der Flusszelle nicht in Berührung kommt und für die Weichkomponente mit dem Fluid unverträgliche Materialien eingesetzt werden können.

Fig. 18 zeigt eine Flusszelle mit einem Substrat 1 und einem Gehäusebauteil 2, dessen Weichkomponente eine Elastomermembran 65 aufweist, die eine Gasfeder begrenzt. In einem Kanal 66 ansteigender Luftdruck beult die Elastomermembran 65 gemäß Strichlinie 67 aus. Ein Betätigungselement 68 eines Betriebsgeräts kann die Auslenkung der Elastomermembran und somit das Volumen der Gasfeder steuern. Es versteht sich, dass ein Gasfedervolumen nicht erst durch Auslenkung sondern von vornherein durch Formung der Elastomermembran oder/und durch Einbuchtung des Substrats 1 gebildet sein kann.

Fig. 19 zeigt einen Funktionsabschnitt einer Flusszelle, durch den eine hermetisch dichte Verbindung zu einer z.B. zu einer Pumpe führenden Leitung eines Betriebsgeräts hergestellt werden kann. Eine Elastomermembran 69, die Bestandteil der Weichkomponente des Gehäusebauteils 2 ist, weist eine Öffnung 70 auf, an welcher z.B. eine Anschlussleitung 71 eines Betriebsgeräts unter Ausübung von Anpressdruck anschließbar ist. Ein Kanal 72 im Substrat 1, der sich an die Öffnung anschließt, ist durch eine mit dem Substrat verklebte oder verschweißte Folie 73 abgedeckt, die für Luft permeabel aber für Flüssigkeiten und Dämpfe undurchlässig ist. So lässt sich die Flusszelle über die Leitung 71 mit Druck beaufschlagen und z.B. in Verbindung mit einem pneumatischen Ventil eines Betriebsgeräts eine schaltbare Entlüftungsöffnung oder schaltbare Gasfeder zur Steuerung des Flüssigkeitstransports in der Flusszelle bilden.

Fig. 20 zeigt einen Funktionsabschnitt einer Flusszelle, welcher der Klemmverbindung der Flusszelle mit einem Sensorelement 74 oder anderem Bauteil aus einem Material dient, das weder mit dem Substrat 1 noch dem Gehäusebauteil 2 direkt verbindbar ist. Ein das Sensorelement 74 gegen das Substrat 1 abdichtendes Ringdichtungselement 75 aus Elastomermaterial ist Bestandteil der Weichkomponente des Gehäusebauteils 2. Zur Klemmverbindung zwischen Sensorelement 74 und Substrat 1 dienen vom Substrat 1 vorstehende Nietstifte 76, die zu einem das Sensorelement 74 gegen den Dichtring 75 drückenden Pilzkopf 77 verformt werden.

Fig. 21 zeigt einen Funktionsabschnitt einer Flusszelle mit einem Substrat 1 und einem Gehäusebauteil 2, dessen Weichkomponente eine Elastomermembran 78 aufweist. Die Elastomermembran 78 deckt eine Probeneingabeöffnung 79 der Flusszelle ab. Ein Schlitz 80 in der Elastomermembran sorgt dafür, dass eine die Probe einbringende Pipette 81 fest umschlossen ist, und es nicht zum Verspritzen von Probenmaterial oder von Reagenzflüssigkeit kommen kann. Nach der Probeneingabe wird die Probeneingabeöffnung 79 durch ein nicht gezeigtes Verschlusselement hermetisch abgedichtet.
Die die Eingabeöffnung abschließende Elastomermembran 78 mit dem Schlitz 80 ist vorteilhaft auch dann verwendbar, wenn die Flusszelle Einrichtungen zur Erzeugung von Unterdruck im Probeneingabekanal aufweist, wobei der Unterdruck z.B. durch die vorangehend beschriebenen, ausgewölbten Pumpelemente erzeugt werden kann. Zum Beispiel ein durch den Schlitz eingeführtes Kapillarröhrchen mit einer Blutprobe kann durch den Unterdruck dann entleert werden, wobei die Elastomermembran 78 das Röhrchen umschließt und abdichtet.

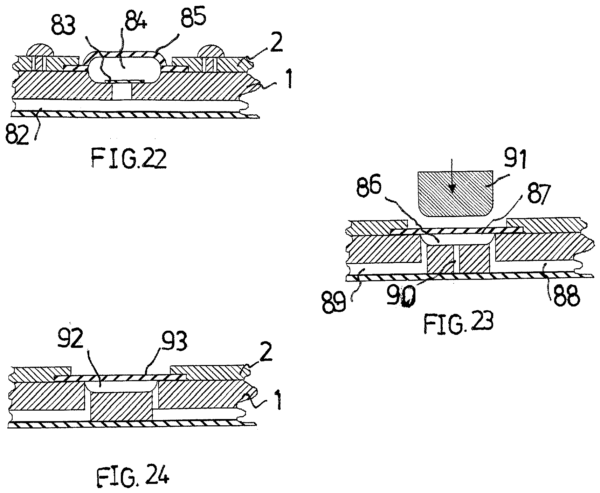

Fig. 22 zeigt einen Funktionsabschnitt einer Flusszelle mit einem Substrat 1 und einem Gehäusebauteil 2, wobei der Funktionsabschnitt zur Entfernung von Luftblasen aus einer in einem Kanal 82 strömenden Flüssigkeit dient. Der Kanal 82 ist über eine luftdurchlässige, aber für Flüssigkeiten undurchlässige Membran 83 mit einem Pumpvolumen 84 verbunden. Über ein ausgewölbtes Pumpenelement 85, das Bestandteil der Weichkomponente des Gehäusebauteils 2 ist, lässt sich, wie oben näher beschrieben ist, ein Unterdruck erzeugen, so dass Luft aus der Flüssigkeit in das Pumpenvolumen übertreten kann.

Fig. 23 zeigt einen Funktionsabschnitt einer ein Substrat 1 und ein Gehäusebauteil 2 aufweisenden Flusszelle, der es ermöglicht, eine in der Flusszelle zu verarbeitende Probenmenge abzumessen.
Eine durch eine Vertiefung in dem Substrat 1 gebildete Durchflusskammer 56 mit einem definierten Volumen ist durch eine Elastomermembran 87, die Bestandteil der Weichkomponente des Gehäusebauteils 2 ist, abgedeckt. Ein Eingangskanal 88 der Durchflusskammer 86 steht mit der Probeneingabeöffnung der Flusszelle in Verbindung, ein Ausgangskanal 89 verbindet die Durchflusskammer 86 mit einer Entlüftungsöffnung (nicht gezeigt). Ein weiterer Ausgangskanal 90 der Durchflusskammer 86 verbindet die Durchflusskammer mit dem zur Verarbeitung und Analyse notwendigen Kanalsystem der Flusszelle und ist nach außen hin verschlossen. Eine Probe wird durch den Anwender in die Probeneingabeöffnung der Flusszelle gedrückt, wobei sich die Durchflusskammer 86 füllt und überschüssiges Material über den Kanal 89 entweicht. Der (zu den Kanälen 88,89 senkrechte) Kanal 90 ist nicht entlüftet. Nach der Probeneingabe werden die Probeneingabeöffnung am Eingang der Flusszelle, d.h. des Kanals 88, sowie eine Entlüftungsöffnung am Ausgang des Kanals 89 mittels einer Kappe, eines Stopfens oder Tapes dicht (mit oder ohne Betriebsgerätunterstützung) verschlossen. Das Absenken eines Stempels 91 in einem Betriebsgerät führt zu einer Volumenverdrängung des in der Durchflusskammer 86 abgemessenen Probenvolumens in den Kanal 90 und das sich daran anschließende, zur Verarbeitung und Analyse notwendigen Kanalsystem der Flusszelle. In gleicher Weise kann auch eine Teilmenge eines Probengemisches oder einer anderen Flüssigkeitsmenge während der Analyse oder Probenverarbeitung abgemessen werden.

Fig. 24 zeigt einen Funktionsabschnitt einer Flusszelle mit einem Bauteil 2 und einer Durchflusskammer 92. Eine Elastomermembran 93, die transparent und Bestandteil der Weichkomponente des Gehäusebauteils 2 ist, bildet ein Sichtfenster zur Kontrolle der Befüllung der Flusszelle mit flüssiger Probe oder zur Kontrolle des Flüssigkeitstransports während der Analyse.

## Patentansprüche

1. Mikrofluidische Flusszelle für die Durchführung einer Analyse, mit einem Substrat (1) aus Kunststoff, das Hohlräume für die Bildung von Kanalstrukturen und Kammern aufweist, wobei die Hohlräume auf einer Seite des Substrats (1) durch eine mit dem Substrat (1) verklebte oder/und verschweißte Folie (3) verschlossen sind, und mit einem als Verbundteil durch Mehrkomponentenspritzgießen mit einer Hart- und einer Weichkomponente hergestellten Gehäusebauteil (2), das auf einer der Folie abgewandten Seite des Substrats (1) unter Komplettierung eines eine Funktion der Flusszelle erfüllenden Funktionsabschnitts mit dem Substrat verbunden ist,
**dadurch gekennzeichnet,**
**dass** das Gehäusebauteil (2) als in einem einzigen Fügeprozess mehr als zwei Funktionsabschnitte komplettierendes Multifunktionsteil ausgebildet ist, dass das Gehäusebauteil (2) mehrere elastisch verformbare, voneinander getrennt angeordnete Weichkomponentenabschnitte aufweist, und dass die Hartkomponente des Gehäusebauteils (2) als Funktionsabschnitt der Flusszelle eine Speicherkammer (33,33',33") komplettiert.

2. Flusszelle nach Anspruch 1,
**dadurch gekennzeichnet,**
**dass** das Gehäusebauteil (2) mit dem Substrat (1) verschweißt, thermisch vernietet oder/und verklebt ist.

3. Flusszelle nach Anspruch 1 oder 2,
**dadurch gekennzeichnet,**
**dass** das Gehäusebauteil (2) einstückig mit einem verschwenkbaren Verschlusselement (6) verbunden und vorzugsweise in der Verschlussstellung arretierbar ist.

4. Flusszelle nach einem der Ansprüche 1 bis 3,
**dadurch gekennzeichnet,**
**dass** die Weichkomponentenabschnitte wenigstens teilweise transparente Weichkomponentenabschnitte (92) umfassen.

5. Flusszelle nach einem der Ansprüche 1 bis 4,
**dadurch gekennzeichnet,**
**dass** die Weichkomponentenabschnitte mit dem Substrat (1) lokal verschweißte oder/und verklebte Weichkomponentenabschnitte umfassen.

6. Flusszelle nach einem der Ansprüche 1 bis 5,
**dadurch gekennzeichnet,**
**dass** die Speicherkammer (33,33',33") jeweils durch eine Sollbruchsperre (34) in einem Zu- und Abflusskanal verschlossen ist.

7. Flusszelle nach einem der Ansprüche 1 bis 6,
**dadurch gekennzeichnet,**
**dass** als Funktionsabschnitt der Flusszelle eine Einrichtung zum Aufbrechen einer Sollbruchsperre (34) gebildet ist, die einen von außen verformbaren Weichkomponentenabschnitt des Gehäusebauteils (2) umfasst.

8. Flusszelle nach einem der Ansprüche 1 bis 7,
**dadurch gekennzeichnet,**
**dass** ein Weichkomponentenabschnitt eine ausgewölbte (17,19) oder auswölbbare Membran (35) umfasst.

9. Flusszelle nach einem der Ansprüche 1 bis 8,
**dadurch gekennzeichnet,**
**dass** als Funktionsabschnitt der Flusszelle ein Septum gebildet ist, das einen mit einer Kanüle durchstoßbaren Weichkomponentenabschnitt (45) des Gehäusebauteils (2) umfasst.

10. Flusszelle nach einem der Ansprüche 1 bis 9,
**dadurch gekennzeichnet,**
**dass** als Funktionsabschnitt der Flusszelle eine Ventileinrichtung gebildet ist, die eine elastisch von außen unter Verschluss einer Ventilöffnung (53) verformbaren Weichkomponentenabschnitt (52) des Gehäuseteils (2) umfasst.

11. Flusszelle nach Anspruch 10,
**dadurch gekennzeichnet,**
**dass** der Weichkomponentenabschnitt eine Membran (52) umfasst, die ggf. innenseitig durch eine Folie (54) abgedeckt ist.

12. Flusszelle nach einem der Ansprüche 1 bis 11,
**dadurch gekennzeichnet,**
**dass** als Funktionsabschnitt der Flusszelle eine Gasfeder gebildet ist, die einen durch Innendruck in der Flusszelle unter Änderung des Gasfedervolumens verformbaren Weichkomponentenabschnitt (65) des Gehäusebauteils (2) umfasst.

## Claims

1. Microfluidic flow cell for carrying out an analysis, having a substrate (1) made of plastic, which has cavities for forming channel structures and chambers, the cavities being closed on one side of the substrate (1) by a film (3) adhesively bonded or/and welded to the substrate (1), and having a structural housing part (2), which is produced by multi-component injection moulding as a composite part having a hard and a soft component and is connected to the substrate on a side of the substrate (1) facing away from the film to complete a functional section that fulfils a function of the flow cell,
**characterized**
**in that** the structural housing part (2) is embodied in the form of a multifunctional part that completes more than two functional sections in a single joining process, in that the structural housing part (2) has a plurality of elastically deformable soft component sections, which are arranged separately from one another, and in that the hard component of the structural housing part (2) completes, as a functional section of the flow cell, a storage chamber (33, 33', 33").

2. Flow cell according to Claim 1,
**characterized**
**in that** the structural housing part (2) is welded, thermally riveted or/and adhesively bonded to the substrate (1).

3. Flow cell according to Claim 1 or 2,
**characterized**
**in that** the structural housing part (2) is connected in one piece to a pivotable closure element (6) and is preferably able to be retained in the closure position.

4. Flow cell according to one of Claims 1 to 3,
**characterized**
**in that** the soft component sections comprise at least partially transparent soft component sections (92).

5. Flow cell according to one of Claims 1 to 4,
**characterized**
**in that** the soft component sections comprise soft component sections locally welded or/and adhesively bonded to the substrate (1).

6. Flow cell according to one of Claims 1 to 5,
**characterized**
**in that** the storage chamber (33, 33', 33") is closed in each case by a predetermined breaking barrier (34) in a feed and discharge channel.

7. Flow cell according to one of Claims 1 to 6,
**characterized**
**in that** a device, which comprises a soft component section, which is deformable from the outside, of the structural housing part (2), for breaking a predetermined breaking barrier (34) is formed as a functional section of the flow cell.

8. Flow cell according to one of Claims 1 to 7,
**characterized**
**in that** a soft component section comprises an outwardly curved (17, 19) or outwardly curvable membrane (35).

9. Flow cell according to one of Claims 1 to 8,
**characterized**
**in that** a septum, which comprises a soft component section (45), which is able to be pierced with a cannula, of the structural housing part (2), is formed as a functional section of the flow cell.

10. Flow cell according to one of Claims 1 to 9,
**characterized**
**in that** a valve device, which comprises a soft component section (52), which is elastically deformable from the outside while closing a valve opening (53), of the structural housing part (2), is formed as a functional section of the flow cell.

11. Flow cell according to Claim 10,
**characterized**
**in that** the soft component section comprises a membrane (52), which is optionally covered on the inside by a film (54).

12. Flow cell according to one of Claims 1 to 11,
**characterized**
**in that** a gas spring, which comprises a soft component section (65), which is deformable by internal pressure in the flow cell while changing the gas spring volume, of the structural housing part (2), is formed as a functional section of the flow cell.

## Revendications

1. Cellule d'écoulement microfluidique destinée à effectuer une analyse, comprenant un substrat (1) en matière plastique qui présente des cavités pour la formation de structures de canaux et de chambres, les cavités étant refermées sur un côté du substrat (1) par une feuille (3) collée et/ou soudée au substrat (1), et comprenant un élément de boîtier (2) qui est réalisé sous forme de pièce composite par coulée par injection à composants multiples avec un composant dur et un composant souple et qui est relié au substrat (1) sur un côté du substrat (1) détourné de la feuille, en venant compléter une portion fonctionnelle qui remplit une fonction de la cellule d'écoulement,
**caractérisée en ce que**
l'élément de boîtier (2) est réalisé sous forme de pièce multifonctionnelle venant compléter plus de deux portions fonctionnelles dans un seul processus d'assemblage,
**en ce que** l'élément de boîtier (2) comprend plusieurs portions de composant souple élastiquement déformables, disposées séparément les unes des autres,
et **en ce que** le composant dur de l'élément de boîtier (2) en tant que portion fonctionnelle de la cellule d'écoulement vient compléter une chambre de stockage (33, 33', 33").

2. Cellule d'écoulement selon la revendication 1,
**caractérisée en ce que**
l'élément de boîtier (2) est soudé, riveté thermiquement ou/et collé au substrat (1).

3. Cellule d'écoulement selon la revendication 1 ou 2,
**caractérisée en ce que**
l'élément de boîtier (2) est relié d'un seul tenant à un élément de fermeture pivotant (6) et peut de préférence être verrouillé en position de fermeture.

4. Cellule d'écoulement selon l'une des revendications 1 à 3,
**caractérisée en ce que**
les portions de composant souple comprennent des portions de composant souple (92) au moins partiellement transparentes.

5. Cellule d'écoulement selon l'une des revendications 1 à 4,
**caractérisée en ce que**
les portions de composant souple comprennent des portions de composant souple localement soudées ou/et collées au substrat (1).

6. Cellule d'écoulement selon l'une des revendications 1 à 5,
**caractérisée en ce que**
la chambre de stockage (33, 33', 33") est refermée par une barrière destinée à la rupture (34) respective dans un canal d'entrée et un canal de sortie.

7. Cellule d'écoulement selon l'une des revendications 1 à 6,
**caractérisée en ce que**
un dispositif pour briser une barrière destinée à la rupture (34) est formé en tant que portion fonctionnelle de la cellule d'écoulement, qui comprend une portion de composant souple de l'élément de boîtier (2) qui peut être déformée de l'extérieur.

8. Cellule d'écoulement selon l'une des revendications 1 à 7,
**caractérisée en ce que**
une portion de composant souple comprend une membrane bombée (17, 19) ou susceptible d'être bombée (35).

9. Cellule d'écoulement selon l'une des revendications 1 à 8,
**caractérisée en ce que**
un septum est formé en tant que portion fonctionnelle de la cellule d'écoulement, qui comprend une portion de composant souple (45) de l'élément de boîtier (2) qui peut être percée par une canule.

10. Cellule d'écoulement selon l'une des revendications 1 à 9,
**caractérisée en ce que**
un dispositif de vanne est formé en tant que portion fonctionnelle de la cellule d'écoulement, qui comprend une portion de composant souple (52) de l'élément de boîtier (2) qui peut être déformée élastiquement de l'extérieur en refermant une ouverture de vanne (53).

11. Cellule d'écoulement selon la revendication 10,
**caractérisée en ce que**
la portion de composant souple comprend une membrane (52) qui, le cas échéant, est recouverte à l'intérieur par une feuille (54).

12. Cellule d'écoulement selon l'une des revendications 1 à 11,
**caractérisée en ce que**
un ressort à gaz est formé en tant que portion fonctionnelle de la cellule d'écoulement, qui comprend une portion de composant souple (65) de l'élément de boîtier (2) qui peut être déformée par la pression interne dans la cellule d'écoulement en variant le volume du ressort à gaz.
